# FASCICULE DE BREVET EUROPEEN

(11) **EP 1 526 054 B1**
(45) Date de publication et mention de la délivrance du brevet: **07.05.2008**
(21) Numéro de dépôt: 04024460.0
(22) Date de dépôt: 14.10.2004
(51) Int. Cl.: B60T 13/567

(54) **Servomoteur d'assistance pneumatique au freinage à montage simplifié pour véhicule automobile et véhicule automobile comportant un tel servomoteur**
Pneumatischer Bremskraftverstärker ausgelegt für eine vereinfachte Montage und Kraftfahrzeug mit einem derartigen Bremskraftverstärker
Pneumatic brake booster having simplified mounting properties and vehicle with a brake booster of this kind

(30) Priorité: 20.10.2003 FR 0312367
(43) Date de publication de la demande: 27.04.2005
(73) Titulaire: ROBERT BOSCH GMBH, 70442 Stuttgart (DE)
(72) Inventeur: Richard, Philippe, 77500 Chelles (FR); Maligne, Jean-Charles, 93300 Aubervilliers (FR)
(74) Mandataire: Hurwic, Aleksander Wiktor

(56) Documents cités:
- DE-A- 10 041 711
- FR-A- 2 638 412
- FR-A- 2 770 478

## Description

La présente invention se rapporte principalement à un servomoteur d'assistance pneumatique au freinage à montage simplifié pour véhicule automobile et à une véhicule automobile comportant un tel servomoteur.

Les servomoteurs d'assistance pneumatique au freinage pour véhicule automobile de type connu comportent une enveloppe formée d'un couvercle et d'un cylindre définissant un volume étanche dans lequel est montée à coulissement étanche une jupe et délimitant une première et une deuxième chambres. La première chambre est raccordée en permanence à une source de vide et la deuxième chambre est au repos en communication avec la première chambre et est susceptible d'être raccordée lors d'une phase de freinage à une source de haute pression au moyen d'une valve trois voies. La valve trois voies est disposée dans la queue d'un piston pneumatique fixé dans un orifice central de la jupe. La valve à trois voies est actionnée par une tige de commande reliée à une pédale de frein.

Le servomoteur est disposé dans un compartiment moteur d'un véhicule automobile et est commandé depuis l'habitacle du véhicule automobile. Le servomoteur est fixé à la paroi, appelé tablier, séparant le compartiment moteur à l'habitacle au moyen de quatre vis fixées au couvercle du tablier, une face du couvercle venant en contact du tablier, les vis traversant le tablier, et de quatre écrous coopérant avec les vis dans l'habitacle du véhicule.
Un passage est pratiqué dans le tablier pour permettre le passage de la tige de commande.
De plus un joint plat, par exemple en mousse est disposé entre la face du couvercle en contact du tablier et du tablier pour assurer l'étanchéité entre le compartiment moteur et l'habitacle, afin d'éviter à l'air, à l'eau ou même à la boue de pénétrer dans le compartiment moteur.

Cette fixation du servomoteur directement sur le tablier est possible lors que le tablier est formé par une tôle sensiblement plane, au moins à l'endroit de fixation du servomoteur. Cependant, afin de ménager de plus en plus d'espace dans l'habitacle pour les passagers, le tablier a parfois une forme complexe avec des renfoncement et des bosses qui rendent difficile la fixation directement du servomoteur sur le tablier. En effet si à l'endroit où le servomoteur doit être fixé, le tablier présente un renfoncement de largeur inférieur au diamètre du servomoteur, il n'est pas possible d'appliquer la face extérieure du couvercle du servomoteur contre le tablier.

Afin de remédier à ce problème, il a été disposé à l'endroit du renfoncement une entretoise d'une part fixée au tablier et d'autre part présentant des moyens de fixation du servomoteur, par exemple par un système vis-écrou.

Les constructeurs automobiles souhaitant réduire les temps et la complexité du montage de chaque élément d'un véhicule automobile et en particulier du servomoteur. Ils souhaitent pouvoir fixer le servomoteur sur le tablier du véhicule par le compartiment moteur sans avoir à intervenir dans l'habitacle.

Il a été proposé dans le document FR-2770478 et le document FR 0210282 non publié un moyen de fixation à baïonnette du servomoteur sur l'entretoise. Des pions sont prévues en saillie de la face avant de la face avant de l'entretoise pour coopérer avec des perçages à section variable pratiqué dans une platine fixée au couvercle du servomoteur. Les pions sont munis de têtes de diamètre inférieur au plus grand diamètre des perçages et supérieur au plus petit diamètre des perçages. Un ressort est également disposé à l'intérieur de l'entretoise et vient appliqué une contrainte sur le couvercle du servomoteur afin de sécuriser l'accrochage par baïonnette.

Cependant ce nouveau mode d'accrochage ne permet plus d'assurer l'étanchéité entre le compartiment moteur et l'habitacle par un simple joint en mousse.

Le document FR-A-2638412 divulgue un servomoteur pneumatique de freinage monté sur une paroi fixe d'un véhicule prévu d'un joint détanchéité entre la paroi et le servomoteur.

C'est un but de la présente invention d'offrir un habitacle d'un véhicule automobile silencieux et confortable et parfaitement isolé de son compartiment moteur.

C'est également un but de la présente invention d'offrir un servomoteur de conception simple et économique permettant cette isolation.

Ces buts sont atteints par un servomoteur apte à être fixé à une entretoise solidaire d'un tablier et comportant des moyens permettant la séparation étanche du compartiment moteur et de l'habitacle en reliant de manière étanche le couvercle à l'habitacle.

En d'autres termes, le moyen d'étanchéité forme une extension du couvercle afin qu'il débouche dans l'habitacle.

La présente invention a principalement pour objet un servomoteur d'assistance pneumatique au freinage pour véhicule automobile, comportant une enveloppe, cylindrique d'axe longitudinal formée d'un cylindre, et d'un couvercle, le couvercle, étant muni à sa surface extérieure d'une platine, comportant des moyens d'accrochage, à une entretoise, fixée à un tablier T du véhicule automobile dans un compartiment moteur, le tablier séparant le compartiment moteur d'un habitacle, une jupe séparant de manière étanche une chambre de dépression et une chambre de travail, une valve trois voies disposée dans une queue d'un piston pneumatique fixé à la jupe, ladite queue de piston étant monté à coulissement dans une cheminée, venue de matière avec le couvercle, et s'étendant vers l'extérieur de l'enveloppe, la valve trois voies étant actionnée par une tige de commande déplaçable à partir de l'habitacle du véhicule automobile en direction du compartiment moteur, et mettant en communication la chambre à dépression et la chambre de travail au repos et la chambre de travail avec une source de fluide à haute pression lors d'une phase de freinage caractérisé en ce qu'il comporte également un moyen tubulaire pour isoler de manière étanche l'habitacle du compartiment moteur et en ce que le moyen tubulaire est un manchon et entoure la cheminée du couvercle et s'étend axialement dans l'habitacle du véhicule lorsque ledit servomoteur est monté dans le véhicule automobile.

La présente invention a également pour objet un servomoteur caractérisé en ce que le moyen tubulaire comporte à une première extrémité, proche du couvercle une embase sensiblement annulaire pincée entre la paroi extérieure du couvercle, et la platine,.

La présente invention a également pour objet un servomoteur caractérisé en ce qu'un deuxième moyen d'étanchéité, est disposé entre une paroi extérieure, du manchon et une paroi intérieure, d'un orifice, de l'entretoise, éloignées du couvercle, ledit orifice, étant en regard d'un passage P pratiqué dans la tablier pour le passage de la tige de commande.

La présente invention a également pour objet un servomoteur caractérisé en ce que le deuxième moyen d'étanchéité est surmoulé dans une deuxième gorge pratiquée sur la paroi extérieure du manchon.

La présente invention a également pour objet un servomoteur caractérisé en ce qu'un premier moyen d'étanchéité est disposé entre une paroi extérieure de la cheminée et une paroi intérieure du manchon.

La présente invention a également pour objet un servomoteur caractérisé en ce que le premier moyen d'étanchéité est surmoulé en avant d'une surface annulaire pratiquée sur la paroi intérieure du manchon.

La présente invention a également pour objet un servomoteur caractérisé en ce qu'un canal axial raccorde la partie avant de la surface annulaire à la deuxième gorge de manière à permettre le surmoulage simultané du premier et du deuxième moyen d'étanchéité par injection de matière dans la partie avant de la surface annulaire.

La présente invention a également pour objet un servomoteur selon l'unie quelconque des revendication précédentes caractérisé en ce que l'air à pression atmosphérique pour alimenter la chambre de travail lors d'une phase de freinage est aspiré dans l'habitacle par l'intermédiaire d'une extrémité du manchon éloignée du couvercle.

La présente invention a également pour objet un servomoteur caractérisé en ce qu'une extrémité du manchon éloignée du couvercle est obturée et en ce que le manchon comporte au moins une ouverture mettant en communication le compartiment moteur CM avec un espace annulaire entourant la queue de piston.

La présente invention a également pour objet un servomoteur caractérisé en ce que l'extrémité du manchon éloignée du couvercle est obturé par un disque muni à son extrémité radialement externe d'au moins une lèvre en contact de manière étanche avec la paroi intérieure du manchon et d'un passage centrale pour la tige de commande et en ce que le passage est bordé par une membrane déroulante venant s'accrocher à la tige de commande et obturé de manière étanche le passage central.

La présente invention a également pour objet un servomoteur caractérisé en ce que le disque est réalisé en thermoplastique et la membrane est réalisée en thermoplastique élastomère.

La présente invention a également pour objet un servomoteur caractérisé en ce qu'un troisième moyen étanche aux liquides et aux pollutions est disposé dans l'espace annulaire en regard des ouvertures en contact du manchon et de la queue de piston et de taille suffisante pour obturer lesdites ouvertures

La présente invention a également pour objet un servomoteur caractérisé en ce que le troisième élément est réalisé en mousse à cellule ouverte.

La présente invention a également pour objet un servomoteur caractérisé en ce que le deuxième moyen d'étanchéité est de section transversale sensiblement en U, en ce que le fond du U est en contact avec la périphérie de l'orifice de l'entretoise.

La présente invention a également pour objet un servomoteur caractérisé en ce qu'un premier moyen d'étanchéité est disposé entre la paroi intérieure de la cheminée et la paroi extérieure de la queue de piston

La présente invention a également pour objet un caractérisé en ce que le premier moyen d'étanchéité est un joint raclant monté fixe sur la cheminée par pincement d'un rétrécissement annulaire d'une deuxième extrémité longitudinale de la cheminée, orientée vers la pédale de frein.

La présente invention a également pour objet un caractérisé en ce que l'extrémité longitudinale du manchon proche du couvercle comporte des secteurs angulaires aptes à coopérer avec une bague de retenu d'un ressort monté dans l'entretoise.

La présente invention a également pour objet un procédé de fabrication d'un servomoteur selon la présente invention comportant entre autres les étapes de mise en place du piston avec la jupe dans le couvercle par introduction de la queue de piston dans la cheminée du couvercle ;
mise en place du cylindre de manière à former l'enveloppe ;
positionnement du manchon tubulaire autour de la cheminée ;
fixation de la platine sur le couvercle en faisant pénétrer le manchon et la cheminée dans l'orifice central de la platine.

La présente invention a également pour objet un procédé de fabrication d'un servomoteur la présente invention comportant entre autres les étapes de mise en place du joint sur la deuxième extrémité longitudinale arrière de la cheminée ;
mise en place du piston avec la jupe dans le couvercle par introduction de la queue de piston dans la cheminée du couvercle ;
mise en place du cylindre de manière à former l'enveloppe ;
positionnement du manchon tubulaire autour de la cheminée ;
fixation de la platine sur le couvercle en faisant pénétrer le manchon et la cheminée dans l'orifice central de la platine.

La présente invention a également pour objet un véhicule automobile comportant tablier séparant un compartiment moteur d'un habitacle, un circuit de freinage muni d'un maître-cylindre raccordé à des freins disposés au niveau de roues, une tige de commande reliée à une pédale de frein disposée dans l'habitacle et traversant le tablier par un passage, un servomoteur interposé entre la tige de commande et le maître-cylindre, ledit servomoteur comportant des moyens d'accrochage à une entretoise, fixée au tablier, ladite entretoise, étant percée d'un passage central, en regard du passage dans le tablier caractérisé en ce que le servomoteur est un servomoteur selon la présente invention.

La présente invention a également pour objet un véhicule automobile caractérisé en ce que les moyens d'accrochage portés par le servomoteur à l'entretoise, sont du type à baïonnette et en ce que ladite entretoise comporte un ressort, de verrouillage maintenu comprimé dans l'entretoise, par une bague, avant la fixation du servomoteur à l'entretoise, et libéré pour venir en appui contre la platine du servomoteur après fixation du servomoteur à l'entretoise, ladite bague, étant maintenue solidaire de l'entretoise, par un système à baïonnette et désolidarisée de ladite entretoise, lors de la fixation du servomoteur à l'entretoise.

Le servomoteur selon la présente invention a pour avantage de comporter un piston dont la queue de piston est protégé des chocs lors du montage dudit servomoteur dans le compartiment moteur par l'élément tubulaire entourant la queue de piston.

Le servomoteur selon la présente invention a également pour avantage d'être de montage facile, le moyen d'étanchéité tubulaire formant un guide pour la mise en place du servomoteur.

De plus, la présente invention permet d'offrir un servomoteur permettant une alimentation en fluide pneumatique à haute pression de la chambre de travail, par exemple en air à pression atmosphérique par aspiration de l'air dans l'habitacle par l'orifice pratiqué dans le tablier et par lequel passe la tige de commande, ou par aspiration dans le compartiment moteur.

La présente invention sera mieux comprise à l'aide de la description qui va suivre et des figures annexées et sur lesquelles l'avant et l'arrière corresponde respectivement à la gauche et la droite des dessins et pour lesquelles :
- La figure 1 est une vue schématique d'un véhicule automobile selon la présente invention ;
- La figure 2 est une vue en perspective arrière d'un servomoteur selon un premier mode de réalisation ;
- La figure 3 est une vue en coupe longitudinale partielle d'un premier mode de réalisation d'un servomoteur selon la présente invention fixé à un tablier d'un véhicule automobile,
- La figure 4 est une vue en coupe longitudinale partielle d'un deuxième mode de réalisation d'un servomoteur selon la présente invention fixé à un tablier d'un véhicule automobile ;
- La figure 5 est une vue écorchée du servomoteur de la figure 4.
- La figure 6 est une vue en perspective d'un détail du servomoteur selon la figure 4.

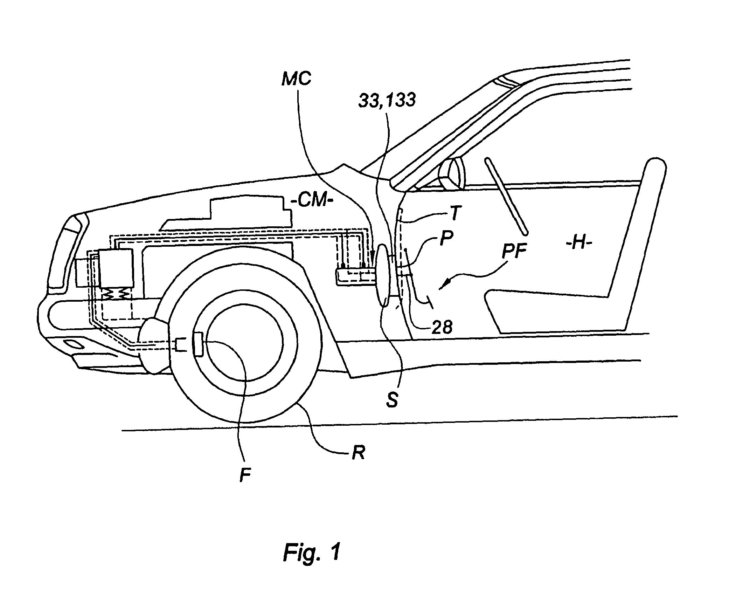

Sur la figure 1, on peut voir un véhicule automobile selon la présente invention comportant un habitacle H duquel est commandé le véhicule automobile, l'habitacle est séparé d'un compartiment moteur CM par un tablier T réalisé en tôle rigide, un circuit de freinage composé entre autres d'un maître-cylindre MC disposé dans le compartiment moteur CM, et raccordé de manière hydraulique à des freins F disposés au niveau de roues R. Le maître-cylindre est commandé par un tige de commande 28 reliée à une pédale de frein PF disposé dans l'habitacle H et traversant le tablier T pat un passage P, l'effort du conducteur sur la pédale de frein PF est amplifié par un servomoteur pneumatique d'assistance au freinage interposé entre le maître-cylindre MC et la tige de commande. Le servomoteur S est fixé au tablier T par l'intermédiaire d'une entretoise 33,133 solidaire du tablier T.

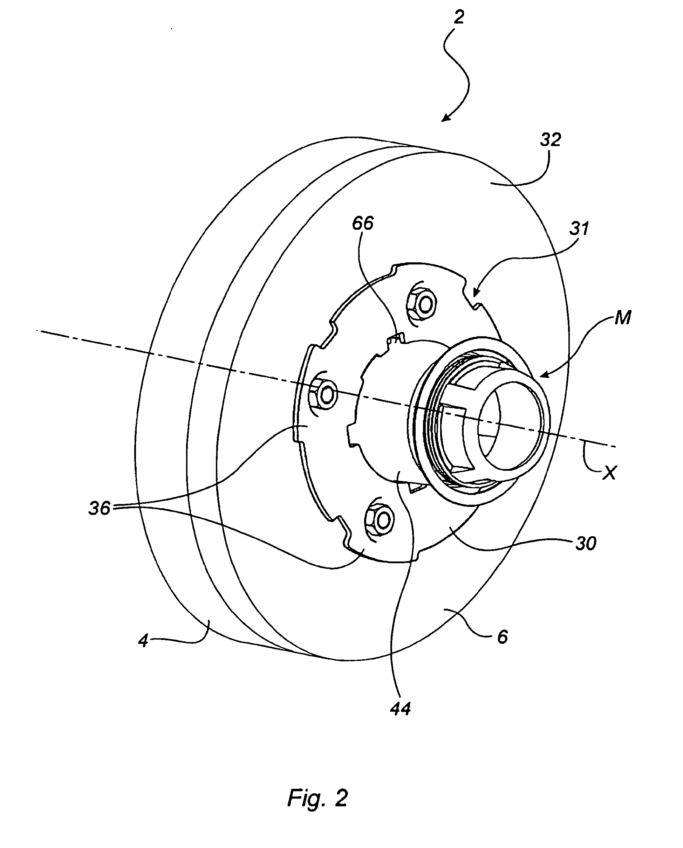

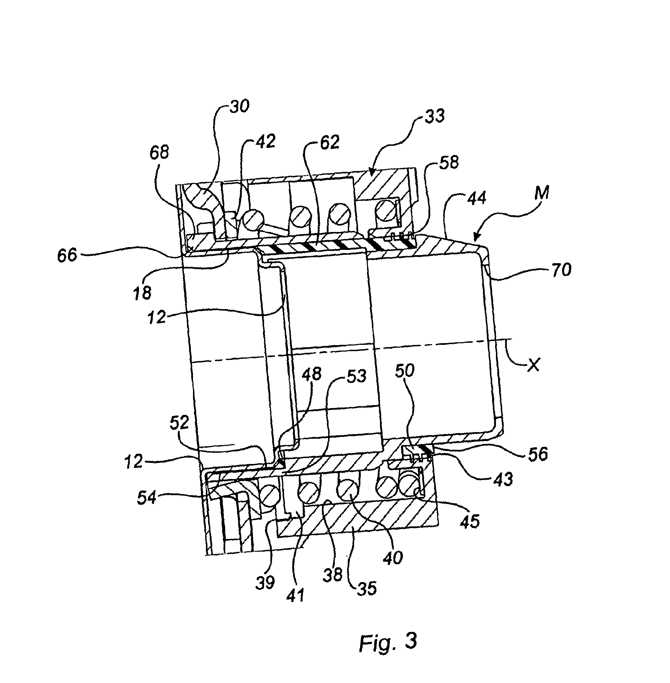

Sur les figures 2 et 3,on peut voir un premier mode de réalisation d'un servomoteur S selon la présente invention comportant une enveloppe 2 d'axe longitudinal X, formé par un cylindre 4 et un couvercle 6 reliés par leur périphérie radialement externe. Le cylindre comporte un orifice central de passage d'une extrémité d'un maître-cylindre (non représentés) et le couvercle comporte un orifice central de passage d'une queue d'un piston pneumatique.

L'orifice 12 s'étend axialement vers l'arrière par une cheminée 18 venue de matière avec le couvercle. Le piston pneumatique est solidaire d'une jupe rigide (non représentée) divisant le volume intérieur de l'enveloppe 2 en une chambre de travail et une chambre de dépression.

Une valve trois voies (non représentée) actionnée par une tige de commande 28 est disposée dans la queue du piston.

La structure et le fonctionnement de la valve trois voies étant bien connus de l'homme du métier, ils ne seront pas détaillés.

Le servomoteur selon la présente invention comporte également des moyens d'accrochage 31 dudit servomoteur à une entretoise 33 fixée sur un tablier de véhicule automobile.

Les moyens 31 comportent une platine 30 annulaire entourant la cheminée 18 du couvercle 6 et fixée sur la paroi extérieure 32 du couvercle 6 au moyen par exemple de quatre ensembles vis-écrou.

La platine 30 a sensiblement la forme d'un disque et comporte sur sa périphérie radialement externe des secteurs angulaires 36 en saillie de la périphérie circulaire, et aptes à coopérer avec un orifice de forme complémentaire porté par l'entretoise 33 de manière à réaliser un accrochage par baïonnette en faisant pivoter autour de l'axe X le servomoteur pour mettre en regard un secteur angulaire porté par la platine et un secteur angulaire porté par l'entretoise.

L'entretoise 33 comporte une partie tubulaire avant 35 d'axe X. Un passage 38 axiale traverse l'entretoise et débouche vers l'avant par un orifice 39 bordé par une gorge annulaire 41 pratiquée dans la paroi intérieure de la partie tubulaire 35 et vers l'arrière par un orifice 43 de diamètre inférieur au diamètre intérieur de la partie tubulaire 35 et définissant une portée annulaire 45.

Un ressort 40 est monté en compression dans le passage 38 entre la portée annulaire 45 et une bague 42 montée dans la gorge annulaire 41. Le ressort 40 est de diamètre intérieur supérieur au diamètre extérieur de la queue de piston. La bague 42 est maintenue immobile dans la gorge 41 par un système de verrouillage à baïonnette, permettant un déverrouillage de la bague 42 et une libération du ressort 40 lors du montage du servomoteur, la bague 42 étant entraînée en rotation par le servomoteur. Le ressort 40 exerce alors sa charge entre le tablier et la face externe du couvercle confirmant alors la fixation du servomoteur à l'entretoise.

Le servomoteur comporte également un moyen M pour isoler de manière étanche l'habitacle du véhicule automobile du compartiment moteur du véhicule automobile. Le moyen M est dans l'exemple représenté, formé par un manchon tubulaire 44 raccordant de manière étanche le couvercle 6 du servomoteur au tablier de manière à prolonger le couvercle 6 et ainsi empêcher l'eau et l'air de passer du compartiment moteur à l'habitacle.

Dans les exemples représentés, le manchon est une pièce rapportée sur le couvercle du servomoteur, cependant le fait de réaliser un manchon venu de matière avec le couvercle du servomoteur ne sort pas du cadre de la présente invention Ceci permet de supprimer les moyens d'étanchéité entre le couvercle et le manchon.

Le manchon tubulaire 44 est de diamètre intérieur avant sensiblement égal au diamètre extérieur de la cheminée 18 du couvercle 6 et de diamètre extérieur arrière inférieur au diamètre intérieur du passage P dans le tablier T.

Le manchon 44 comporte à une première extrémité longitudinale avant 66 des découpes définissant des secteurs angulaires 68 (figure 2) de manière à coopérer avec la bague 42 de maintien du ressort 40. De plus, les extrémités arrières des secteurs angulaires 68 sont de diamètre extérieur supérieur au diamètre intérieur de la platine 30, formant une butée axiale vers l'arrière du manchon 44 et maintenant ainsi le manchon solidaire du couvercle 6 du servomoteur.

Des premier et deuxième éléments d'étanchéité 48,50 sont disposés respectivement entre une face intérieure avant 52 du manchon tubulaire 44 et une paroi extérieure arrière 54 de la cheminée 18 et une paroi extérieure arrière 56 du manchon tubulaire 44 et une paroi intérieure 58 de l'entretoise 33. De manière avantageuse, l'éléments 50 est disposé dans une deuxième gorge pratiquée dans la paroi 54 du manchon 44.

Dans l'exemple représenté, le premier élément d'étanchéité 48 est disposé contre une face annulaire 53 pratiquée dans la paroi intérieure 52 du manchon 44. On pourrait cependant prévoir une première gorge dans la paroi 52.

Dans l'exemple préféré de réalisation, les éléments d'étanchéité 48,50 sont réalisés par injection de matière dans le moule de réalisation du manchon tubulaire 44 qui est réalisé par exemple en matériau plastique, chargé en fibres de verre, par exemple par bi-injection.

Le manchon 44 comporte un canal longitudinal 62 raccordant la face annulaire 53 et la deuxième gorge permettant ainsi l'injection du matériau élastomère en avant de la face 53 et de la deuxième gorge simultanément.

On obtient alors de manière avantageuse une seule pièce munie des étanchéités nécessaire, permettant ainsi de simplifier le montage.

Cependant il est bien entendu que les premier et deuxième éléments d'étanchéité 48,50 peuvent être par exemple des joints rapportés, par exemple des joints toriques.

Dans ce mode de réalisation, l'alimentation en air à pression atmosphérique de la chambre de travail s'effectue par aspiration dans l'habitacle par l'intermédiaire de l'extrémité arrière 70 du manchon 44.

De manière avantageuse, le manchon 44 est de forme sensiblement tronconique orienté vers l'arrière de manière à former un guide pour le montage du servomoteur dans l'entretoise et l'orifice du tablier. De plus la queue de piston est protégée des chocs qui peuvent éventuellement advenir lors du montage du servomoteur dans le compartiment moteur.

Le procédé de fabrication d'un servomoteur selon le premier mode de réalisation comporte entre autres les étapes suivantes :
- mise en place du piston avec la jupe (non représentée) dans le couvercle 6 par introduction de la queue de piston dans la cheminée 18 du couvercle 6;
- mise en place du cylindre 4 de manière à former l'enveloppe 2;
- positionnement du manchon tubulaire 44 autour de la cheminée 18 ;
- fixation de la platine sur le couvercle 6 en faisant pénétrer le manchon 44 et la cheminée dans l'orifice central de la platine 30.

Le montage du servomoteur selon le premier mode de réalisation dans le compartiment moteur du véhicule automobile s'effectue par
- pénétration du manchon 44 dans le passage 48 de l'entretoise 33 jusqu'à ce que la platine 30 vienne en contact de la face avant de l'entretoise 33 ;
- rotation du servomoteur dans un sens déterminé de manière à faire coopérer les secteurs angulaires 36 portés respectivement par la platine 30 et par l'entretoise et libérer le ressort 40 de manière à ce qu'il applique un effort axial contre la platine 30.

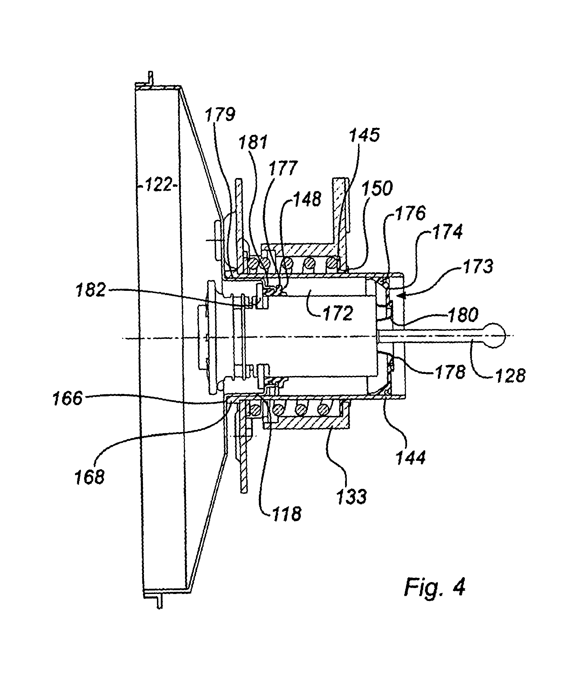

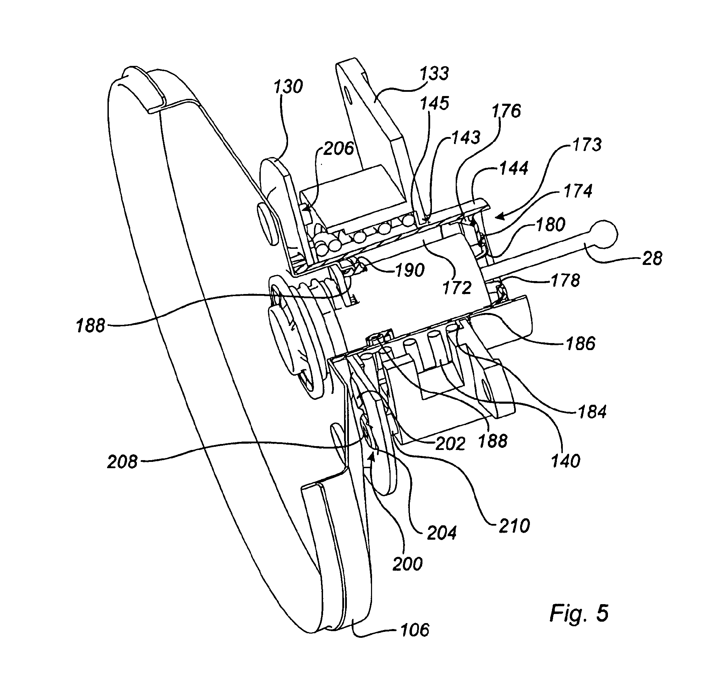

Sur les figures 4 et 5, on peut voir un deuxième mode de réalisation d'un servomoteur selon la présente invention permettant une aspiration de l'air depuis le compartiment moteur, augmentant alors le confort auditif des passagers, puisqu'il n'y a plus de bruit d'écoulement d'air entre l'habitacle et le compartiment moteur.

Les références utilisés pour les figures 2 et 3 augmentées de 100 seront utilisés pour décrire les éléments ayant la même fonction.

Dans le deuxième mode de réalisation, les moyens d'accrochage du servomoteur à l'entretoise 133 sont formés par des orifices 200 pratiqués dans la platine 130, lesdits orifices étant formés par une partie de plus grand diamètre 202 et une partie de plus petit diamètre 204 et des pions 206 portés par l'entretoise 133. Les pions 206 sont d'axe X orientés vers le compartiment moteur CM et munis d'une tête 208 reliées à l'entretoise 133 par une tige 210, la tête 208 étant de diamètre inférieure au diamètre de la partie de plus grand diamètre 202 des orifices 200 portés par la platine et de diamètre supérieur au diamètre de la partie de plus petit diamètre 204.

Les pions 206 et les orifices 200 sont avantageusement au nombre de quatre, répartis angulairement respectivement sur la platine 130 et l'entretoise 133. Le mode d'accrochage est le même que celui du servomoteur selon le premier mode de réalisation.

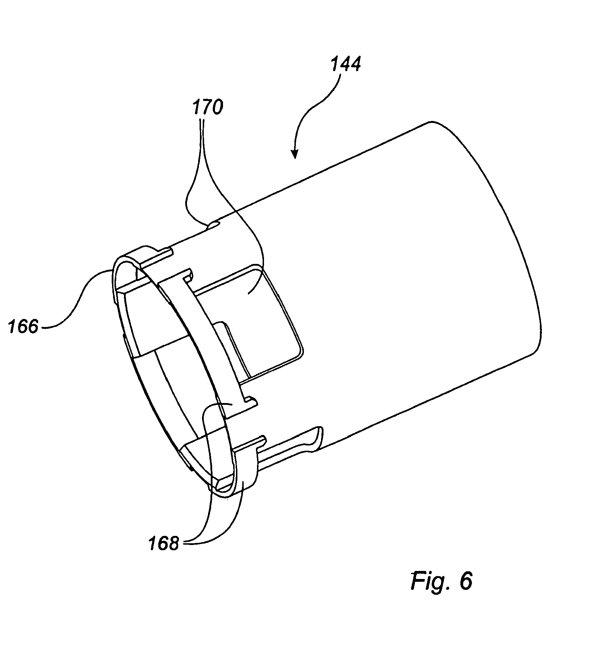

Le manchon 144 comporte des ouvertures 170 (figure 6) pratiquées la partie avant du manchon et mettant en communication un espace annulaire 172 entourant la queue de piston et le compartiment moteur CM. Les ouvertures 170 sont dans l'exemple représenté de forme rectangulaire, mais il est bien entendu que l'on peut prévoir des ouvertures 170 de forme différente, par exemple de forme circulaire.

L'espace annulaire 172 est susceptible d'être mis en communication par la valve trois voies avec la chambre de travail 122 afin de l'alimenter en air à pression atmosphérique.

Le manchon 144 comporte une extrémité longitudinale arrière 170 obturée par un élément annulaire 173 formé par un disque annulaire 174 rigide, d'une lèvre annulaire 176 bordant la périphérie radialement externe du disque 174 et de diamètre extérieur égal au diamètre intérieur de l'extrémité arrière du manchon 144 et susceptible de glisser de manière étanche le long de la paroi intérieure du manchon.

L'élément 173 comporte également en son centre un orifice 178 de passage de la tige de commande 28 et bordé d'une membrane déroulante 180 venant s'accrocher sur le bord de l'orifice 178 et sur la tige de commande.

De manière avantageuse, le disque 174 et la lèvre 176 sont réalisés en thermoplastique et la membrane 180 est réalisé en thermoplastique élastomère. Le disque, la lèvre et la membrane sont alors moulés simultanément, par un procédé de co-injection.

Le servomoteur comporte également un premier élément 148 isolant de manière étanche la chambre de travail 122 de l'espace annulaire 172, formé par un joint à lèvre accroché à une deuxième extrémité longitudinale arrière 177 de la cheminée 118 du couvercle 106. Dans l'exemple représenté, la cheminée 118 comporte une première partie avant de plus grand diamètre 179 et une deuxième partie arrière de plus petit diamètre 181 et raccordées par une portée annulaire formant une butée axiale arrière pour le piston par l'intermédiaire d'une clé 182 montée transversalement dans le piston. De plus l'extrémité arrière 177 de la cheminée est munie d'un rétrécissement radial 188 pénétrant dans une gorge annulaire 190 pratiquée dans la paroi radialement externe du joint 148.

Un deuxième élément d'étanchéité 150 est également disposé entre la paroi extérieure du manchon 144 et l'orifice arrière de l'entretoise. Le moyen d'étanchéité a une section transversale générale en U, le fond du U venant en contact de la périphérie de l'orifice 143 arrière de l'entretoise et les branches 184,186 du U venant s'appliquer sur la portée 145 annulaire de l'entretoise orientée du côté du compartiment moteur et sur la paroi arrière de l'entretoise en appui sur le tablier.

Il est bien entendu que l'on peut prévoir de réaliser l'étanchéité entre l'entretoise 133 et le manchon 144 au niveau de l'orifice 143 par un moyen d'étanchéité surmoulé sur la paroi extérieure du manchon 144 comme cela a été réalisé dans le premier mode de réalisation.

De manière avantageuse, un troisième élément d'étanchéité (non représenté) aux liquides et aux pollutions est disposé dans l'espace annulaire 172 en regard des ouvertures 170 afin d'éviter un pénétration de liquide ou d'autres pollutions dans l'espace annulaire 172 et une perturbation du fonctionnement du servomoteur. Le troisième élément est de forme sensiblement annulaire, de diamètre intérieur sensiblement égal au diamètre extérieur de la queue de piston, de diamètre extérieur sensiblement égal au diamètre intérieur du manchon 144, et d'extension axial au moins égal à l'extension axial des orifices 170. Le troisième élément est réalisé par exemple en mousse à cellules ouvertes.

Le procédé de fabrication d'un servomoteur selon le deuxième mode de réalisation comporte entre autres les étapes suivantes :
- mise en place du joint 148 sur la deuxième extrémité longitudinale arrière 167 de la cheminée 118 ;
   mise en place du piston avec la jupe (non représentée) dans le couvercle 106 par introduction de la queue de piston dans la cheminée 118 du couvercle 106;
- mise en place du cylindre 104 de manière à former l'enveloppe 102;
- positionnement du manchon tubulaire 144 autour de la cheminée 118 ;
- fixation de la platine sur le couvercle 106 en faisant pénétrer le manchon 144 et la cheminée dans l'orifice central de la platine.

Le montage du servomoteur selon le deuxième mode de réalisation dans le compartiment moteur du véhicule automobile s'effectue par
- mise en place du deuxième élément d'étanchéité 150 sur la périphérie de l'orifice 143 de l'entretoise en regard du passage dans le tablier.
- pénétration du manchon 144 dans le passage de l'entretoise jusqu'à ce que la platine vienne 130 en contact de la face avant de l'entretoise et de la tige de commande 28 et des pions 206 dans les parties de plus grand diamètre 202 des orifices 206;
- rotation du servomoteur dans un sens déterminé de manière à faire coulisser les pions 206 dans les parties de plus petit diamètre 204 des orifices 206 et libérer le ressort de manière à ce qu'il applique un effort axial contre la platine.

Il est bien entendu qu'il est envisageable de rajouter un joint en mouse entre l'entretoise et la tablier pour améliorer d'avantage l'isolation phonique de l'habitacle par rapport au compartiment moteur.

On a bien réaliser un servomoteur apte à être fixé à un tablier de véhicule automobile par un dispositif à baïonnette, et assurant une étanchéité entre le compartiment moteur et l'habitacle

La présente invention s'applique principalement à l'industrie du freinage pour voitures particulières.

## Revendications

1. Servomoteur d'assistance pneumatique au freinage pour véhicule automobile, comportant une enveloppe (2,102) cylindrique d'axe longitudinal (X) formée d'un cylindre (4,104) et d'un couvercle (6,106), le couvercle (6,106) étant muni à sa surface extérieure d'une platine (30,130) comportant des moyens d'accrochage (36,206) à une entretoise (33,133) fixée à un tablier (T) du véhicule automobile dans un compartiment moteur (CM), le tablier (T) séparant le compartiment moteur (CM) d'un habitacle (H), une jupe séparant de manière étanche une chambre de dépression et une chambre de travail (122), une valve trois voies disposée dans une queue d'un piston pneumatique (116) fixé à la jupe (20), ladite queue de piston étant monté à coulissement dans une cheminée (18,118) venue de matière avec le couvercle (6,106) et s'étendant vers l'extérieur de l'enveloppe (2,102), la valve trois voies étant actionnée par une tige de commande (28) déplaçable à partir de l'habitacle (H) du véhicule automobile en direction du compartiment moteur (CM), et mettant en communication la chambre à dépression et la chambre de travail (122) au repos et la chambre de travail (122) avec une source de fluide à haute pression lors d'une phase de freinage **caractérisé en ce qu'**il comporte également un moyen tubulaire (M) pour isoler de manière étanche l'habitacle (H) du compartiment moteur (CM) et **en ce que** le moyen tubulaire (M) est un manchon et entoure la cheminée (18) du couvercle (6) et s'étend axialement dans l'habitacle (H) du véhicule lorsque ledit servomoteur est monté dans le véhicule automobile.

2. Servomoteur selon la revendication 1 **caractérisé en ce que** le moyen tubulaire comporte à une première extrémité (66,166) proche du couvercle une embase sensiblement annulaire pincée entre la paroi extérieure du couvercle (6,106) et la platine (30,130).

3. Servomoteur selon l'une des revendications précédentes **caractérisé en ce qu'**un deuxième moyen d'étanchéité (50,150) est disposé entre une paroi extérieure (56,156) du manchon et une paroi intérieure (58,158) d'un orifice (43,143) de l'entretoise (33,133) éloignées du couvercle, ledit orifice (43,143) étant en regard d'un passage (P) pratiqué dans la tablier pour le passage de la tige de commande(28).

4. Servomoteur selon la revendication précédente **caractérisé en ce que** le deuxième moyen d'étanchéité (50) est surmoulé dans une deuxième gorge pratiquée sur la paroi extérieure (56) du manchon (44).

5. Servomoteur selon l'une quelconque des revendications précédentes **caractérisé en ce qu'**un premier moyen d'étanchéité (48) est disposé entre une paroi extérieure (54) de la cheminée (18) et une paroi intérieure (52) du manchon (44).

6. Servomoteur selon la revendication précédente **caractérisé en ce que** le premier moyen d'étanchéité (48) est surmoulé en avant d'une surface annulaire (53) pratiquée sur la paroi intérieure (52) du manchon (44).

7. Servomoteur selon la revendication précédente en combinaison avec la revendication 5 **caractérisé en ce qu'**un canal axial raccorde la partie avant de la surface annulaire (53) à la deuxième gorge de manière à permettre le surmoulage simultané du premier et du deuxième moyen d'étanchéité par injection de matière dans la partie avant de la surface annulaire (53).

8. Servomoteur selon l'une quelconque des revendication précédentes **caractérisé en ce que** l'air à pression atmosphérique pour alimenter la chambre de travail lors d'une phase de freinage est aspiré dans l'habitacle par l'intermédiaire d'une extrémité (70) du manchon (44) éloignée du couvercle (6).

9. Servomoteur selon l'une des revendications 1 à 5, **caractérisé en ce qu'**une extrémité du manchon (144) éloignée du couvercle est obturée et **en ce que** le manchon (144) comporte au moins une ouverture (170) mettant en communication le compartiment moteur (CM) avec un espace annulaire (172) entourant la queue de piston.

10. Servomoteur selon la revendication précédente **caractérisé en ce que** l'extrémité du manchon (144) éloignée du couvercle est obturé par un disque (174) muni à son extrémité radialement externe d'au moins une lèvre (176) en contact de manière étanche avec la paroi intérieure du manchon (144) et d'un passage centrale (178) pour la tige de commande (28) et **en ce que** le passage (178) est bordé par une membrane déroulante (180) venant s'accrocher à la tige de commande (28) et obturé de manière étanche le passage central (178).

11. Servomoteur selon la revendication précédente **caractérisé en ce que** le disque (174) est réalisé en thermoplastique et la membrane (180) est réalisée en thermoplastique élastomère.

12. Servomoteur selon l'une des revendications de 9 à 11 **caractérisé en ce qu'**un troisième moyen étanche aux liquides et aux pollutions est disposé dans l'espace annulaire (172) en regard des ouvertures (170) en contact du manchon (144) et de la queue de piston et de taille suffisante pour obturer lesdites ouvertures (170)

13. Servomoteur selon la revendication précédente **caractérisé en ce que** le troisième élément est réalisé en mousse à cellule ouverte.

14. Servomoteur selon l'une quelconque des revendications de 1 à 5, 9 à 13 en combinaison avec la revendication 4 **caractérisé en ce que** le deuxième moyen d'étanchéité (150) est de section transversale sensiblement en U, **en ce que** le fond du U est en contact avec la périphérie de l'orifice (143) de l'entretoise.

15. Servomoteur selon l'une quelconque des revendications 9 à 14 **caractérisé en ce qu'**un premier moyen d'étanchéité (148) est disposé entre la paroi intérieure de la cheminée et la paroi extérieure de la queue de piston

16. Servomoteur selon la revendication précédente **caractérisé en ce que** le premier moyen d'étanchéité (148) est un joint raclant monté fixe sur la cheminée (118) par pincement d'un rétrécissement annulaire (188) d'une deuxième extrémité longitudinale (176) de la cheminée, orientée vers la pédale de frein.

17. Servomoteur selon l'une quelconque des revendications précédentes **caractérisé en ce que** l'extrémité longitudinale du manchon proche du couvercle comporte des secteurs angulaires aptes à coopérer avec une bague de retenu (42,142) d'un ressort (40,140) monté dans l'entretoise.

18. Procédé de fabrication d'un servomoteur selon l'une des revendications de 1 à 8, 17 comportant entre autres les étapes de
- mise en place du piston avec la jupe dans le couvercle (6) par introduction de la queue de piston dans la cheminée (18) du couvercle (6);
- mise en place du cylindre (4) de manière à former l'enveloppe (2);
- positionnement du manchon tubulaire (44) autour de la cheminée (18) ;
- fixation de la platine sur le couvercle (6) en faisant pénétrer le manchon (44) et la cheminée dans l'orifice central de la platine.

19. Procédé de fabrication d'un servomoteur selon l'une des revendications de 9 à 17 comportant entre autres les étapes de
- mise en place du joint (148) sur la deuxième extrémité longitudinale arrière (167) de la cheminée (118) ;
- mise en place du piston avec la jupe dans le couvercle (106) par introduction de la queue de piston dans la cheminée (118) du couvercle (106);
- mise en place du cylindre (104) de manière à former l'enveloppe (102);
- positionnement du manchon tubulaire (144) autour de la cheminée (118);
- fixation de la platine sur le couvercle (106) en faisant pénétrer le manchon (144) et la cheminée dans l'orifice central de la platine.

20. Véhicule automobile comportant tablier (T) séparant un compartiment moteur (CM) d'un habitacle (H), un circuit de freinage muni d'un maître-cylindre (Mc) raccordé à des freins (F) disposés au niveau de roues (R), une tige de commande (28) reliée à une pédale de frein (PF) disposée dans l'habitacle (H) et traversant le tablier (T) par un passage (P), un servomoteur (S) interposé entre la tige de commande (28) et le maître-cylindre (MC), ledit servomoteur comportant des moyens d'accrochage à une entretoise (33,133) fixée au tablier (T), ladite entretoise (33,133) étant percée d'un passage central (43,143) en regard du passage (P) dans le tablier **caractérisé en ce que** le servomoteur est un servomoteur selon l'une quelconque des revendications 1 à 17.

21. Véhicule automobile selon la revendication 20 **caractérisé en ce que** les moyens d'accrochage portés par le servomoteur à l'entretoise (33,133) sont du type à baïonnette et **en ce que** ladite entretoise comporte un ressort (40,140) de verrouillage maintenu comprimé dans l'entretoise (33,133) par une bague (42,142) avant la fixation du servomoteur à l'entretoise (33,133) et libéré pour venir en appui contre la platine du servomoteur après fixation du servomoteur à l'entretoise (33,133), ladite bague (42,142) étant maintenue solidaire de l'entretoise (33,133) par un système à baïonnette et désolidarisée de ladite entretoise (33,133) lors de la fixation du servomoteur à l'entretoise.

## Claims

1. Pneumatic brake booster for a motor vehicle, comprising a cylindrical casing (2, 102) of longitudinal axis (X) formed by a cylinder (4, 104) and by a cover (6, 106), the cover (6, 106) being provided at its outer surface with a plate (30, 130) comprising means (36, 206) for attaching to a spacer (33, 133) fastened to a bulkhead (T) of the motor vehicle in an engine compartment (CM), the bulkhead (T) separating the engine compartment (CM) from a cabin (H), a skirt sealingly separating a vacuum chamber and a working chamber (122), a three-way valve arranged in a tail of a pneumatic piston (116) fastened to the skirt (20), said piston tail being slidably mounted in a stub (18, 118) integrally formed with the cover (6, 106) and extending outwardly from the casing (2, 102), the three-way valve being actuated by a control rod (28), which can be moved from the cabin (H) of the motor vehicle towards the engine compartment (CM), and bringing the vacuum chamber and the working chamber (122) into communication in the inoperative state and the working chamber (122) into communication with a high-pressure fluid source during a braking phase, **characterized in that** it also comprises a tubular means (M) for sealingly isolating the cabin (H) from the engine compartment (CM), and **in that** the tubular means (M) is a sleeve and surrounds the stub (18) of the cover (6) and extends axially into the cabin (H) of the vehicle when the said booster is mounted in the motor vehicle.

2. Booster according to Claim 1, **characterized in that** the tubular means comprises, at a first end (66, 166) close to the cover, a substantially annular base clamped between the outer wall of the cover (6, 106) and the plate (30, 130).

3. Booster according to either of the preceding claims, **characterized in that** a second sealing means (50, 150) is arranged between an outer wall (56, 156) of the sleeve and an inner wall (58, 158) of an orifice (43, 143) of the spacer (33, 133), which are remote from the cover, the said orifice (43, 143) being opposite a passage (P) made in the bulkhead for the passage of the control rod (28).

4. Booster according to the preceding claim, **characterized in that** the second sealing means (50) is overmoulded in a second groove made in the outer wall (56) of the sleeve (44).

5. Booster according to any one of the preceding claims, **characterized in that** a first sealing means (48) is arranged between an outer wall (54) of the stub (18) and an inner wall (52) of the sleeve (44).

6. Booster according to the preceding claim, **characterized in that** the first sealing means (48) is overmoulded in front of an annular surface (53) formed on the inner wall (52) of the sleeve (44).

7. Booster according to the preceding claim in combination with Claim 5, **characterized in that** an axial duct connects the front part of the annular surface (53) to the second groove so as to allow the simultaneous overmoulding of the first and second sealing means by injecting material into the front part of the annular surface (53).

8. Booster according to any one of the preceding claims, **characterized in that** air at atmospheric pressure for supplying the working chamber during a braking phase is sucked into the cabin via an end (70) of the sleeve (44) that is remote from the cover (6).

9. Booster according to one of Claims 1 to 5, **characterized in that** an end of the sleeve (144) remote from the cover is closed off, and **in that** the sleeve (144) comprises at least one opening (170) bringing the engine compartment (CM) into communication with an annular space (172) surrounding the piston tail.

10. Booster according to the preceding claim, **characterized in that** the end of the sleeve (144) remote from the cover is closed off by a disc (174) provided at its radially external end with at least one lip (176) in sealing contact with the inner wall of the sleeve (144), the disc also being provided with a central passage (178) for the control rod (28), and **in that** the passage (178) is bordered by an unwinding diaphragm (180) which is attached to the control rod (28) and sealingly closes off the central passage (178).

11. Booster according to the preceding claim, **characterized in that** the disc (174) is made of thermoplastic and the diaphragm (180) is made of thermoplastic elastomer.

12. Booster according to one of Claims 9 to 11, **characterized in that** a third liquid-tight and pollution-tight means is arranged in the annular space (172) opposite the openings (170) in contact with the sleeve (144) and the piston tail and is sufficiently large in size to close off the said openings (170).

13. Booster according to the preceding claim, **characterized in that** the third element is made of open-cell foam.

14. Booster according to any one of Claims 1 to 5, 9 to 13 in combination with Claim 4, **characterized in that** the second sealing means (150) has a substantially U-shaped cross section, and **in that** the bottom of the U is in contact with the periphery of the orifice (143) of the spacer.

15. Booster according to any one of Claims 9 to 14, **characterized in that** a first sealing means (148) is arranged between the inner wall of the stub and the outer wall of the piston tail.

16. Booster according to the preceding claim, **characterized in that** the first sealing means (148) is a scraping seal mounted fixedly on the stub (118) by clamping an annular narrowed portion (188) of a second longitudinal end (176) of the stub, oriented towards the brake pedal.

17. Booster according to any one of the preceding claims, **characterized in that** the longitudinal end of the sleeve close to the cover comprises angular sectors designed to cooperate with a retaining ring (42, 142) for a spring (40, 140) mounted in the spacer.

18. Method of manufacturing a booster according to one of Claims 1 to 8, 17, comprising inter alia the steps consisting of:
- fitting the piston with the skirt in the cover (6) by introducing the piston tail into the stub (18) of the cover (6);
- fitting the cylinder (4) so as to form the casing (2);
- positioning the tubular sleeve (44) around the stub (18);
- fastening the plate on the cover (6) by engaging the sleeve (44) and the stub in the central orifice of the plate.

19. Method of manufacturing a booster according to one of Claims 9 to 17, comprising inter alia the steps consisting in:
- fitting the seal (148) on the second rear longitudinal end (167) of the stub (118);
- fitting the piston with the skirt in the cover (106) by introducing the piston tail into the stub (118) of the cover (106);
- fitting the cylinder (104) so as to form the casing (102);
- positioning the tubular sleeve (144) around the stub (118);
- fastening the plate on the cover (106) by engaging the sleeve (144) and the stub in the central orifice of the plate.

20. Motor vehicle comprising a bulkhead (T) separating an engine compartment (CM) from a cabin (H), a braking circuit provided with a master cylinder (MC) connected to brakes (F) arranged on wheels (R), a control rod (28) connected to a brake pedal (PF) arranged in the cabin (H) and crossing the bulkhead (T) via a passage (P), a booster (S) interposed between the control rod (28) and the master cylinder (MC), the said booster comprising means for attaching to a spacer (33, 133) fastened to the bulkhead (T), the said spacer (33, 133) being perforated with a central passage (43, 143) opposite the passage (P) in the bulkhead, **characterized in that** the booster is a booster according to any one of Claims 1 to 17.

21. Motor vehicle according to Claim 20, **characterized in that** the attachment means borne by the booster for attaching it to the spacer (33, 133) are of the bayonet type, and **in that** the said spacer comprises a locking spring (40, 140) maintained compressed in the spacer (33, 133) by a ring (42, 142) before fastening the booster to the spacer (33, 133) and released so as to bear against the plate of the booster after fastening the booster to the spacer (33, 133), the said ring (42, 142) being maintained secured to the spacer (33, 133) by a bayonet system and detached from the said spacer (33, 133) when fastening the booster to the spacer.

## Patentansprüche

1. Pneumatischer Servomotor zur Bremsunterstützung für ein Kraftfahrzeug, der ein zylindrisches Gehäuse (2,102) mit der Längsachse (X) aufweist, das durch einen Zylinder (4, 104) und einen Deckel (6, 106) gebildet ist, wobei der Deckel (6, 106) an seiner Außenfläche mit einer Platte (30, 130) versehen ist, die Mittel (36, 206) zum Festhaken an einem Zwischenelement (33, 133) aufweist, welches in einem Motorraum (CM) an einer Spritzwand (T) des Kraftfahrzeugs befestigt ist, wobei die Spritzwand (T) den Motorraum (CM) von einem Fahrgastraum (H) trennt, eine Schürze, die eine Unterdruckkammer und eine Arbeitskammer (122) in dichter Weise trennt, ein Dreiwegeventil, das in einem Endstück eines an der Schürze (20) befestigten pneumatischen Kolbens (116) angeordnet ist, wobei das Kolbenendstück gleitend in einem Schacht (18, 118) angebracht ist, der mit dem Deckel (6,106) einstückig ausgebildet ist und sich zum Äußeren des Gehäuses (2, 102) erstreckt, wobei das Dreiwegeventil von einer Steuerstange (28) betätigt wird, die ausgehend vom Fahrgastraum (H) des Kraftfahrzeugs in Richtung Motorraum (CM) verlagert werden kann, und in der Ruhephase die Unterdruckkammer mit der Arbeitskammer (122) und bei einer Bremsphase die Arbeitskammer (122) mit einer Hochdruckfluidquelle verbindet, **dadurch gekennzeichnet, dass** er auch ein rohrförmiges Mittel (M) aufweist, um den Fahrgastraum (H) in dichter Weise vom Motorraum (CM) zu isolieren, und dass das rohrförmige Mittel (M) eine Hülse ist, den Schacht (18) des Deckels (6) umgibt und sich axial in den Fahrgastraum (H) des Fahrzeugs erstreckt, wenn der Servomotor im Kraftfahrzeug angebracht ist.

2. Servomotor nach Anspruch 1, **dadurch gekennzeichnet, dass** das rohrförmige Mittel an einem ersten Ende (66, 166) nahe dem Deckel einen im Wesentlichen ringförmigen Sockel aufweist, der zwischen der Außenwand des Deckels (6, 106) und der Platte (30, 130) geklemmt ist.

3. Servomotor nach einem der vorhergehenden Ansprüche, **dadurch gekennzeichnet, dass** ein zweites Dichtmittel (50, 150) zwischen einer Außenwand (56, 156) der Hülse und einer Innenwand (58, 158) einer Öffnung (43, 143) des Zwischenelements (33, 133), die vom Deckel beabstandet sind, angeordnet ist, wobei die Öffnung (43, 143) einem Durchgang (P) gegenüberliegt, der für das Durchführen der Steuerstange (28) in der Spritzwand ausgebildet ist.

4. Servomotor nach dem vorhergehenden Anspruch, **dadurch gekennzeichnet, dass** das zweite Dichtmittel (50) in einer zweiten Nut aufgeformt ist, welche an der Außenwand (56) der Hülse (44) ausgebildet ist.

5. Servomotor nach einem der vorhergehenden Ansprüche, **dadurch gekennzeichnet, dass** ein erstes Dichtmittel (48) zwischen einer Außenwand (54) des Schachts (18) und einer Innenwand (52) der Hülse (44) angeordnet ist.

6. Servomotor nach dem vorhergehenden Anspruch, **dadurch gekennzeichnet, dass** das erste Dichtmittel (48) vor einer ringförmigen Fläche (53) aufgeformt ist, welche an der Innenwand (52) der Hülse (44) ausgebildet ist.

7. Servomotor nach dem vorhergehenden Anspruch in Kombination mit Anspruch 5, **dadurch gekennzeichnet, dass** ein axialer Kanal den vorderen Bereich der ringförmigen Fläche (53) mit der zweiten Nut verbindet, damit das erste und das zweite Dichtmittel durch Einspritzen von Material in den vorderen Bereich der ringförmigen Fläche (53) gleichzeitig aufgeformt werden können.

8. Servomotor nach einem der vorhergehenden Ansprüche, **dadurch gekennzeichnet, dass** die Luft mit atmosphärischem Druck zur Speisung der Arbeitskammer während einer Bremsphase über ein vom Deckel (6) beabstandetes Ende (70) der Hülse (44) im Fahrgastraum angesaugt wird.

9. Servomotor nach einem der Ansprüche 1 bis 5, **dadurch gekennzeichnet, dass** ein vom Deckel beabstandetes Ende der Hülse (144) verschlossen ist und die Hülse (144) mindestens eine Öffnung (170) aufweist, die den Motorraum (CM) mit einem ringförmigen Raum (172) verbindet, der das Kolbenendstück umgibt.

10. Servomotor nach dem vorhergehenden Anspruch, **dadurch gekennzeichnet, dass** das vom Deckel beabstandete Ende der Hülse (144) durch eine Scheibe (174) verschlossen ist, die an ihrem radial äußeren Ende mit mindestens einer Lippe (176), die die Innenwand der Hülse (144) in dichter Weise berührt, und mit einem mittleren Durchgang (178) für die Steuerstange (28) versehen ist und dass der Durchgang (178) von einer Abrollmembran (180) umrandet ist, die sich an der Steuerstange (28) festhakt und in dichter Weise den mittleren Durchgang (178) verschließt.

11. Servomotor nach dem vorhergehenden Anspruch, **dadurch gekennzeichnet, dass** die Scheibe (174) aus Thermoplast hergestellt ist und die Membran (180) aus Elastomer-Thermoplast hergestellt ist.

12. Servomotor nach einem der Ansprüche 9 bis 11, **dadurch gekennzeichnet, dass** ein drittes, gegenüber Flüssigkeiten und Verunreinigungen undurchlässiges Mittel im ringförmigen Raum (172) gegenüber den Öffnungen (170) so angeordnet ist, dass es die Hülse (144) und das Kolbenendstück berührt, und dass es ausreichend groß ist, um die Öffnungen (170) zu verschließen.

13. Servomotor nach dem vorhergehenden Anspruch, **dadurch gekennzeichnet, dass** das dritte Element aus offenzelligem Schaum hergestellt ist.

14. Servomotor nach einem der Ansprüche 1 bis 5, 9 bis 13 in Kombination mit Anspruch 4, **dadurch gekennzeichnet, dass** das zweite Dichtmittel (150) einen im Wesentlichen U-förmigen Querschnitt hat und der Boden des U den Umfang der Öffnung (143) des Zwischenelements berührt.

15. Servomotor nach einem der Ansprüche 9 bis 14, **dadurch gekennzeichnet, dass** ein erstes Dichtmittel (148) zwischen der Innenwand des Schachts und der Außenwand des Kolbenendstücks angeordnet ist.

16. Servomotor nach dem vorhergehenden Anspruch, **dadurch gekennzeichnet, dass** das erste Dichtmittel (148) ein Abstreifer ist, der durch Klemmen einer ringförmigen Verengung (188) eines zweiten, zum Bremspedal gerichtetes Längsende (176) des Schachts fest am Schacht (118) angebracht ist.

17. Servomotor nach einem der vorhergehenden Ansprüche, **dadurch gekennzeichnet, dass** das Längsende der Hülse, das nahe dem Deckel liegt, Winkelsektoren aufweist, die mit einem Ring (42, 142) zum Halten einer im Zwischenelement angebrachten Feder (40, 140) zusammenwirken.

18. Verfahren zur Herstellung eines Servomotors nach einem der Ansprüche 1 bis 8 und 17, das unter anderem die Schritte umfasst, bei denen
- der Kolben mit der Schürze in den Deckel (6) eingesetzt wird durch Einführen des Kolbenendstücks in den Schacht (18) des Deckels (6);
- der Zylinder (4) so eingesetzt wird, dass das Gehäuse (2) gebildet wird;
- die rohrförmige Hülse (44) um den Schacht (18) herum positioniert wird;
- die Platine am Deckel (6) befestigt wird, indem die Hülse (44) und der Schacht in die mittlere Öffnung der Platine eingeführt werden.

19. Verfahren zur Herstellung eines Servomotors nach einem der Ansprüche 9 bis 17, das unter anderem die Schritte umfasst, bei denen
- die Dichtung (148) auf das zweite, hintere Längsende (167) des Schachts (118) angeordnet wird;
- der Kolben mit der Schürze in den Deckel (106) eingesetzt wird durch Einführen des Kolbenendstücks in den Schacht (118) des Deckels (106);
- der Zylinder (104) so eingesetzt wird, dass das Gehäuse (102) gebildet wird;
- die rohrförmige Hülse (144) um den Schacht (118) herum positioniert wird;
- die Platine am Deckel (106) befestigt wird, indem die Hülse (144) und der Schacht in die mittlere Öffnung der Platine eingeführt werden.

20. Kraftfahrzeug mit einer Spritzwand (T), die einen Motorraum (CM) von einem Fahrgastraum (H) trennt, einem Bremskreis, der mit einem Hauptzylinder (Mc) versehen ist, der mit auf Höhe von Rädern (R) angeordneten Bremsen (F) verbunden ist, einer Steuerstange (28), die mit einem im Fahrgastraum (H) angeordneten Bremspedal (PF) verbunden ist und die Spritzwand (T) über einen Durchgang (P) durchquert, einem Servomotor (S), der zwischen der Steuerstange (28) und dem Hauptzylinder (MC) angeordnet ist, wobei der Servomotor Mittel zum Festhaken an einem an der Spritzwand (T) befestigten Zwischenelement (33, 133) aufweist, wobei das Zwischenelement (33, 133) gegenüber dem Durchgang (P) in der Spritzwand mit einem mittleren Durchgang (43, 143) durchsetzt ist, **dadurch gekennzeichnet, dass** der Servomotor ein Servomotor nach einem der Ansprüche 1 bis 17 ist.

21. Kraftfahrzeug nach Anspruch 20, **dadurch gekennzeichnet, dass** die vom Servomotor getragenen Mittel zum Festhaken am Zwischenelement (33, 133) vom Typ mit Bajonett sind und das Zwischenelement eine Verriegelungsfeder (40, 140) aufweist, die vor der Befestigung des Servomotors am Zwischenelement (33, 133) von einem Ring (42, 142) im Zwischenelement (33, 133) zusammengedrückt gehalten ist und gelöst wird, um nach der Befestigung des Servomotors am Zwischenelement (33, 133) an die Platine des Servomotors in Anlage zu gelangen, wobei der Ring (42, 142) von einem Bajonettsystem so gehalten ist, dass er mit dem Zwischenelement (33, 133) fest verbunden ist, und bei der Befestigung des Servomotors am Zwischenelement vom Zwischenelement (33, 133) getrennt wird.
